# EUROPÄISCHE PATENTSCHRIFT

(11) **EP 1 943 726 B1**
(45) Veröffentlichungstag und Bekanntmachung des Hinweises auf die Patenterteilung: **09.06.2010**
(21) Anmeldenummer: 06793741.7
(22) Anmeldetag: 22.09.2006
(51) Int. Cl.: H02P 25/08, H02M 1/00

(54) **ELEKTRONISCHE GLEICHSPANNUNGS-ZWISCHENSCHALTUNG**
ELECTRONIC INTERMEDIATE DC CIRCUIT
CIRCUIT ELECTRONIQUE INTERMEDIAIRE A TENSION CONTINUE

(30) Priorität: 05.10.2005 DE 102005047654; 20.10.2005 DE 102005050278
(43) Veröffentlichungstag der Anmeldung: 16.07.2008
(73) Patentinhaber: Vorwerk & Co. Interholding GmbH, 42275 Wuppertal (DE)
(72) Erfinder: POPPEN, Günter, 42477 Radevormwald (DE); CALDEWEY, Uwe, 44229 Dortmund (DE); LANG, Torsten, 42657 Solingen (DE)
(74) Vertreter: Müller, Enno
(86) Internationale Anmeldenummer: PCT/EP2006/066621
(87) Internationale Veröffentlichungsnummer: WO 2007/039487

(56) Entgegenhaltungen:
- EP-A- 1 174 998
- JP-A- 5 260 787
- US-A- 5 115 181

## Beschreibung

Die Erfindung betrifft eine elektronische Gleichspannungs-Zwischenschaltung nach den Merkmalen des Oberbegriffes des einzeigen Anspruches.

Bei bürstenlosen Motoren, wie beispielsweise Reluktanzmotoren, wie sie weiter zum Beispiel bei Haushaltsgeräten wie Haushaltsstaubsaugern zur Anwendung kommen, erfolgt die Speisung aus einem Gleichspannungszwischenkreis. Als Eingangsstufe für die Netzsinusspannung wird eine passive Gleichrichterbrücke eingesetzt, welche eine Elektrolytkondensatorbank auf den Scheitelwert der Eingangsspannung auflädt. Dieser Zwischenkreis kann als Speicher betrachtet werden, aus welchem der Motor über den Wechselrichter seine Energie holen und in den er seine Freilaufenergie zurückgeben kann. Die aus der Nachladung des Zwischenkreises resultierenden Oberwellen im Versorgungsnetz werden, sofern für die entsprechende Applikation Maßgaben vorliegen, mit zusätzliche PFC-Maßna1unen (bspw. Power Factor Correction Drossel) gedämpft. Ist der Zwischenkreis auf den Scheitelwert der Netzspannung aufgeladen, wird dem Netz kein Strom entnommen. Durch die Speisung des Motors aus dem Zwischenkreiskondensator wird dieser entladen, demzufolge die Zwischenkreisspannung unter den Scheitelwert der Netzspannung sinkt. Steigt nunmehr der Augenblickswert der speisenden Netzsimusspannung über dieses Spannungsniveau, beginnt der Kondensator nachzuladen, was einen sprunghaften, nicht sinusförmigen Stromanstieg im speisenden Netz zur Folge hat. Für die Amplituden der hieraus resultierenden Netzoberwellen werden durch die Norm EN 61000-3 maximal zulässige Werte vorgeschrieben. Um diese einzuhalten, ist es bekannt, die vorgenannten PFC-Maßnahmen anzuwenden.

Eine Schaltung der in Rede stehenden Art ist aus der US 5,115,181 bekannt. In der dort beschriebenen Schaltung sind der Gleichrichterbrücke zwei Kondensatoren unterschiedlicher Kapazitäten nachgeschaltet.

Ausgehend hiervon beschäftigt sich die Erfindung mit der Aufgabe, eine vorteilhafte elektronische Gleichspannungs-Zwischenschaltung anzugeben.

Diese Aufgabe ist beim Gegenstand des Anspruches 1 gelöst, wobei darauf abgestellt ist, dass der Kondensator, insbesondere eine Elektrolyt-Kondensator, eine Kapazität von mindestens 50 µF aufweist, angepasst an die mögliche Freilaufenergie des Motors, dass der netzseitig wirksame Kondensator, insbesondere ein Folien-Kondensator, eine Kapazität von höchstens 500 µF aufweist, im Hinblick auf eine Einhaltung von zulässigen Werten betreffend Netzoberwellen bei einem sprunghaften, nicht sinusförmigen Stromanstieg im speisenden Netz, und dass parallel zu den Kondensatoren eine Sperrdiode vorgesehen ist und dass die Sperrdiode mit einer Zenerdiode parallel geschaltet ist. Die zwei getrennten Kondensatoren des Zwischenkreiskondensators sind derart verschaltet, dass netzseitig bevorzugt ein Folienkondensator mit einer aus Sicht der Oberwellennorm unkritisch kleinen Kapazität wirksam ist. Die Freilaufenergie wird in einen zweiten, entsprechend großen Elektrolytkondensator geleitet. Die Anordnung von Sperrdiode und Zenerdiode dient im Betrieb der Schaltung an sogenannten weichen Versorgungsnetzen zur Verringerung von auftretenden Spannungsüberhöhungen im Eingangskondensator (bevorzugt Folienkondensator mit geringer Kapazität) durch eine Energieübertragung in den Freilaufkondensator (bevorzugt Elektrolytkondensator mit hoher Kapazität). Die Freilaufenergie aus dem Motor kann aufgenommen werden, ohne im speisenden Netz Oberwellen außerhalb der Norm zu erzeugen. Auch ist eine Gewichts- und Bauraumreduzierung erreicht.

Die beiden Kondensatoren sind in einer Parallelschaltung zwischen der netzseitigen Gleichrichterbrücke und der Ansteuerseite des Motors geschaltet, so beispielsweise vorgeschaltet einem Wechselrichter oder einer Transistorschaltung. Ein Kondensator, so bevorzugt ein Elektrolytkondensator, weist eine relativ hohe Kapazität von mehreren Mikrofarad auf, so beispielsweise mehr als 50 µF oder mehr als 250 µF, mehr als 500 µF oder mehr als 1000 µF. Die Kapazität ist an die mögliche Freilaufenergie des Motors angepasst. Der weitere Kondensator, so bevorzugt ein Folienkondensator, weist eine geringe Kapazität von wenigen Mikrofarad auf so beispielsweise weniger als 500 µF oder weniger als 250 µF oder weniger als 50 µF.

Die relativ hohe Kapazität des einen Kondensators, bevorzugt Elektrolytkondensators, kann in weiterer Einzelheit mehr als 250µF, mehr als 500µF oder mehr als 1000µF betragen. Dies in Anpassung an die mögliche Freilaufenergie des Motors. Der weitere Kondensator, bevorzugt ein Folienkondensator, kann eine Kapazität von weniger als 250µF oder weniger als 50µF aufweisen.

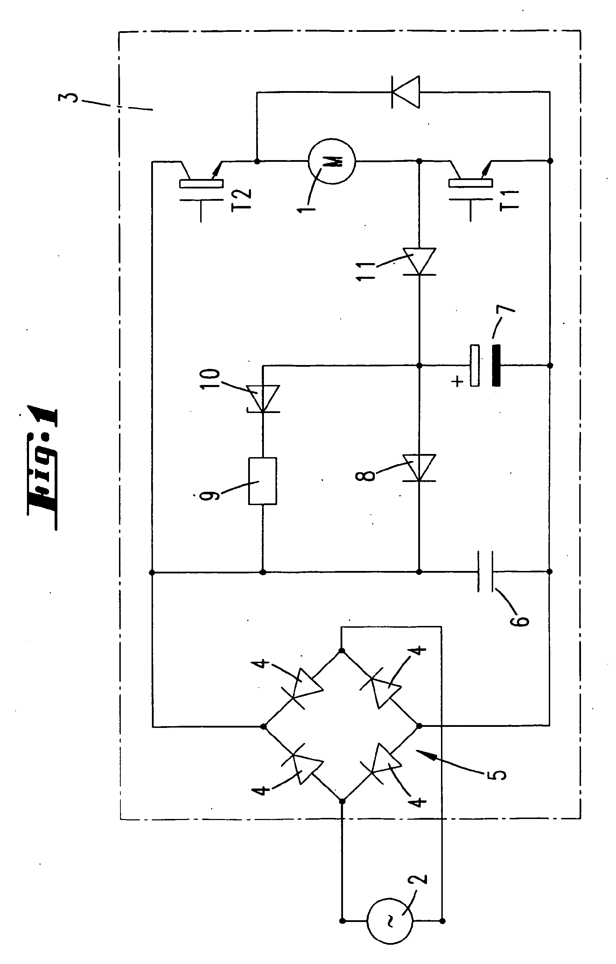

Die Erfindung ist nachstehend anhand der beigefügten Zeichnung, welche lediglich ein Ausführungsbeispiel darstellt, näher erläutert. Hierbei zeigt Figur 1 eine beispielhafte Schaltungsanordnung.

Diese Schaltungsanordnung dient zur Speisung eines hier mehrphasigen Motors 1 aus einem Energieversorgungsnetz 2 unter Zwischenschaltung einer Gleichspamungs-Zwischenschaltung 3.

Als Eingangsstufe für die Netzsiunusspannung ist eine aus Dioden 4 bestehende Gleichrichterbrücke 5 eingesetzt. Über diesen Zweiwrege-Brückengleichrichter werden zwei parallel geschaltete Kondensatoren 6 und 7 gespeist. Bei dem Kondensator 6 handelt es sich um einen Folienkondensator mit einer geringen Kapazität von wenigen Mikrofarad. Als zweiter Kondensator 7 ist ein Elektrolytkondensator vorgesehen. Dieser weist gegenüber dem Kondensator 6 eine wesentlich höhere Kapazität auf. Diese beträgt mehrere Mikrofarad, so weiter beispielsweise 500 µF.

Die beiden Kondensatoren 6 und 7 sind über eine Sperrdiode 8 derart verschaltet, dass netzseitig nur der, einen Eingangskondensator bildende Folienkondensator 6 mit einer aus Sicht der Oberwellnnorm unkritisch kleinen Kapazität wirksam ist. Die Freilaufenergie wird in den zweiten, entsprechend großen Elektrolytkondensator 7 geleitet.

Zusätzlich werden die Kondensatoren 6 und 7 über eine aus zueinander in Reihe geschalteten Widerstand 9 und Zenerdiode 10 gebildete Baugruppe verbunden. Diese parallel zur Sperrdiode 8 geschaltete Baugruppe aus Widerstand 9 und Zenerdiode 10 dient dazu, um bei Betrieb der Schaltung an sogenannten weichen Versorgungsnetzen die im Eingangskondensator durch eine Energieübertragung in den Freilaufkondensator (Elektrolytkondensator 7) auftretende Spannungsüberhöhung zu verringern.

Der Motor 1 wird über eine der Kondensatorbank nachgeschaltete Transistorschaltung (mit Transistoren T₁ und T₂) unter Zwischenschaltung einer weiteren Sperrdiode 11 angesteuert.

## Patentansprüche

1. Elektronische Gleichspannungs-Zwischenschaltung (3) zum Einsatz bei bürstenlosen Elektromotoren (1) wie beispielsweise Reluktanzmotoren, mit einer aus Dioden (4) bestehenden Gleichrichterbrücke (5), wobei der Gleichrichterbrücke (5) zwei Kondensatoren (6, 7) nachgeschaltet sind und die Kondensatoren (6, 7) unterschiedliche Kapazitäten aufweisen, **dadurch gekennzeichnet, dass**
- der erste, netzseitige, Kondensator (6), insbesondere ein Folien-Kondensator, im Hinblick auf eine Einhaltung von zulässigen Werten betreffend Netzoberwellen bei einem sprunghaften, nicht sinusförmigen Stromanstieg im speisenden Netz eine relativ niedrige Kapazität von weniger als 500 Mikrofarad aufweist,
- der zweite, motorseitige, Kondensator (7), insbesondere ein Elektrolyt-Kondensator, in seiner Größe an die mögliche Freilaufenergie des Elektromotors (1) angepasst ist und eine relativ hohe Kapazität von mehr als 50 Mikrofarad aufweist,
- dass beide Kondensatoren (6, 7) über die Gleichrichterbrücke gespeist werden
- und dass beide Kondensatoren über eine zueinander in Reihe geschaltete Baugruppe aus Widerstand (9) und Zenerdiode (10) verbunden sind, um bei Betrieb der Schaltung an sogenannten weichen Versorgungsnetzen im ersten, netzseitigen Eingangs-Kondensator (6) durch eine Energieübertragung in den zweiten, motorseitigen FreilaufKondensator (7) auftretende Spannungsüberhöhung zu verringern.

## Claims

1. Electronic direct current intermediate circuit (3) for use with brushless electric motors (1), such as reluctance motors, comprising a rectifier bridge (5) consisting of diodes (4), two capacitors (6, 7) being connected downstream of the rectifier bridge (5) and the capacitors (6, 7) having different capacitances, **characterised in that**
- the first, grid-side capacitor (6), in particular a film capacitor, has a relatively low capacitance of less than 500 microfarads to maintain permissible grid harmonics values when there is a sudden, non-sinusoidal rise in current in the supplying grid,
- the second, motor-side capacitor (7), in particular an electrolytic capacitor, is matched, in terms of the size thereof, to the potential freewheel energy of the electric motor (1) and has a relatively high capacitance of more than 50 microfarads,
- that both capacitors (6, 7) are energized via the rectifier bridge (5) and
- that both capacitors are linked together via an assembly consisting of the resistor (9) and Zener diode (10) in order to reduce the overvoltage which occurs in the first grid-side input capacitor (6) by transferring energy into the second, motor-side freewheel capacitor when the circuit is operating with what are known as weak grids.

## Revendications

1. Circuit électronique intermédiaire à tension continue (3) destiné à une mise en oeuvre avec des moteurs électriques sans balais (1), tels que par exemple des moteurs à réluctance variable, pourvu d'un pont redresseur (5) à diodes (4) (5), deux condensateurs (6, 7) étant montés derrière le pont redresseur (5), les condensateurs (6, 7) présentant des capacités différentes, **caractérisé en ce que**
- en considération d'un respect des valeurs admissibles concernant des ondes harmoniques du réseau en cas d'une augmentation de courant brusque, non sinusoïdale dans le réseau d'alimentation, le premier condensateur (6), celui du côté du réseau, en particulier un condensateur à film, présente une capacité relativement basse de moins de 500 microfarads,
- le deuxième condensateur (7), celui du côté du moteur, en particulier un condensateur électrolytique, a une taille adaptée à la possible énergie en régime libre du moteur électrique (1) et présente une capacité relativement élevée de plus de 50 microfarads,
- le deux condensateurs (6, 7) sont alimentés par le pont redresseur (5) et
- le condensateur sont couplés ensemble par un group qui se compose de la résistance (9) et de la diode zener (10) pour réduire la surélévation de tension apparaissant dans le premier condensateur d'entrée (6) du côté réseau en raison d'une transmission d'énergie dans le deuxième condensateur de régime libre (7) du côté moteur.
